# FASCICULE DE BREVET EUROPEEN

(11) **EP 3 222 466 B1**
(45) Date de publication et mention de la délivrance du brevet: **14.02.2024**
(21) Numéro de dépôt: 17160889.6
(22) Date de dépôt: 14.03.2017
(51) Int. Cl.: B60Q 3/80, H05B 45/12, H05B 47/125, G01S 13/88

(54) **PROCÉDÉ DE COMMANDE D'ÉCLAIRAGE INTÉRIEUR D'UN VÉHICULE AUTOMOBILE**
VERFAHREN ZUR STEUERUNG EINER INNENBELEUCHTUNG EINES KRAFTFAHRZEUGS
METHOD FOR CONTROLLING AN INTERIOR LIGHT OF A MOTOR VEHICLE

(30) Priorité: 21.03.2016 FR 1652408
(43) Date de publication de la demande: 27.09.2017
(73) Titulaire: Valeo Vision, 93012 Bobigny Cedex (FR)
(72) Inventeur: FLEURENCE, Thierry, 57685 Augny (FR); KONIEC, Aymeric, 94350 Villiers Sur Marne (FR)
(74) Mandataire: Valeo Visibility

(56) Documents cités:
- EP-A2- 1 477 351
- EP-A2- 2 977 264
- WO-A1-2015/062751
- WO-A1-2015/130571
- DE-A1-102009 016 918
- DE-A1-102011 009 229
- DE-A1-102012 022 321
- DE-A1-102015 008 071
- JP-A- 2015 205 647
- US-A1- 2014 197 757
- US-A1- 2014 361 989

## Description

La présente invention concerne un procédé de commande de l'éclairage intérieur d'un véhicule reconnaissance gestuelle et un dispositif configuré pour exécuter ledit procédé

Les dispositifs de détection de mouvement ou de reconnaissance gestuelle sont de plus en plus répandus dans les systèmes informatiques. On trouve notamment de nombreuses applications pour ordinateurs et consoles de jeux. Dans le domaine automobile, le développement de véhicules autonomes et communicants passe par l'utilisation d'interfaces tactiles ou vocales permettant l'échange d'informations entre l'occupant et le véhicule. Certains véhicules peuvent prévoir des systèmes de reconnaissance gestuelle pour des applications de sécurité active du véhicule comme le suivi de vigilance du conducteur. Ces systèmes sont aptes à détecter et analyser des mouvements de la tête, du visage et des yeux du conducteur tels que, par exemple, l'ouverture des paupières, la position des pupilles, la direction du regard, la position et de l'inclinaison de la tête. Le système, constitué d'une unité de détection, d'une unité de calcul et d'un logiciel, est alors apte à déterminer le niveau de vigilance et de distraction ou l'état de somnolence du conducteur et peut, en conséquence, transmettre une alerte d'endormissement ou de distraction en temps réel. Le processus associé à un tel dispositif de commande de reconnaissance gestuelle comporte au moins une étape de détection et de collecte de données, une étape de comparaison des informations obtenues à des données de référence puis une étape de commande et/ou de contrôle de fonctions de mise en sécurité du véhicule. En réponse à une perte de vigilance ou à un détournement de l'attention du conducteur, les systèmes embarqués ont la capacité à intervenir sur le contrôle du véhicule en proposant, par exemple, une aide au maintien de trajectoire, un freinage automatique en pleine puissance, une régulation de la vitesse ou une assistance au pilotage.

L'invention a pour objectif de proposer un procédé et un dispositif fiable de commande à reconnaissance gestuelle permettant le contrôle de l'éclairage intérieur d'un véhicule, ledit dispositif étant apte à limiter les reconnaissances de séquences parasites de mouvements pouvant pénaliser le procédé de reconnaissance et les actions qui en découlent. Le dispositif selon l'invention renforce la sécurité des occupants du véhicule en ne perturbant pas la vigilance du conducteur qui reste concentré sur la trajectoire du véhicule. Le confort et le bien-être des occupants sont aussi améliorés.

L'invention a pour objet un procédé de commande de l'éclairage intérieur d'un véhicule selon la revendication 1 et un dispositif de commande selon la revendication 3 étant configuré pour exécuter ledit procédé

On comprend que, selon l'invention, la détection d'une séquence gestuelle, va déclencher la commande d'un faisceau lumineux propre à réaliser une fonction d'éclairage intérieur.

On pourra prévoir qu'un module d'éclairage est apte à émettre une pluralité de faisceaux lumineux à chacun desquels est respectivement associée une séquence, notamment une séquence gestuelle, déterminée, le dispositif de commande étant agencé pour commander l'émission de l'un ou l'autre des faisceaux lumineux en fonction de la détection d'une séquence ou d'une autre séquence. Le module d'éclairage peut à titre d'exemple être apte à émettre sélectivement au moins deux faisceaux lumineux distincts par leur couleur et/ou leur intensité et/ou leur orientation, le dispositif de commande étant agencé pour commander l'émission de l'un ou l'autre des faisceaux lumineux en fonction de la détection d'une séquence associée à l'un des faisceaux lumineux spécifiques.

Et on pourra prévoir, alternativement ou en combinaison avec ce qui précède, que le dispositif d'éclairage selon l'invention comprend au moins deux modules d'éclairage aptes à émettre un faisceau lumineux dans l'habitacle, le dispositif de commande étant agencé pour commander l'émission d'un faisceau lumineux par l'un ou l'autre des modules d'éclairage en fonction de la détection d'une séquence associée à ce module d'éclairage.

Plus particulièrement, on pourra prévoir qu'un dispositif de commande selon l'invention comporte au moins un module de détection et de capture de séquence gestuelle apte à détecter, capturer et enregistrer une séquence gestuelle d'un occupant du véhicule dans une zone de détection active de l'habitacle pour transmettre des données représentatives de ladite séquence gestuelle, un module de commande, connecté audit module de détection et de capture de séquence gestuelle, apte à recevoir les données représentatives de ladite séquence gestuelle enregistrée, à les comparer à au moins une séquence gestuelle de référence et à déterminer si les conditions seuil de déclenchement d'une fonction d'éclairage sont atteintes, ledit module de commande étant configuré pour générer et transmettre au moins une instruction d'allumage et/ou d'extinction et/ou de variation de l'intensité lumineuse et/ou d'orientation d'un faisceau émis par le au moins un module d'éclairage.

La séquence gestuelle détectée consiste en une succession de gestes définis par le mouvement de tout ou partie du corps d'au moins un occupant, de préférence d'un membre supérieur d'un occupant, de préférence du conducteur. Chaque membre supérieur étant constitué de trois segments : bras, avant-bras et main.

On détecte une séquence gestuelles dès lors qu'à intervalles réguliers, avantageusement très courts, on enregistre une position différente de la partie du corps détectée en mouvement.

Une séquence gestuelle est principalement définie par une trajectoire exécutée dans une zone de détection active, selon une orientation verticale, horizontale, ou diagonale, dans un sens ou dans l'autre.

L'orientation de la séquence de gestes, c'est-à-dire la direction et le sens que l'on peut déterminer en mettant bout à bout l'ensemble des positions de la partie du corps détectée, permet de déterminer un allumage ou une extinction d'une source lumineuse et/ou une orientation correspondante de tout ou partie du module d'éclairage pour déplacer en conséquence le faisceau.

La vitesse d'exécution de la séquence gestuelle peut également être prise en compte. On comprend qu'en fonction de la quantité de modules d'éclairage à activer et de leurs positionnements dans l'habitacle, de nombreuses combinaisons de gestes associées à des zones de détection précises peuvent être crées de manière à constituer un langage gestuel fonctionnel.

De même, on entend par zone de détection active, de préférence, une zone de l'habitacle pouvant être aussi bien définie par une ou plusieurs surface(s) plane(s) 2D que par un ou plusieurs volume(s) 3D. La zone de détection active peut couvrir de façon large l'habitacle, en étant centré sur l'axe médian de l'habitacle, ou bien pour améliorer la définition des images prises dans la zone, être ciblée sur une partie de l'habitacle et notamment celle du conducteur ou bien une partie de l'habitacle dans laquelle un occupant a été détecté.

On pourra prévoir que le module d'éclairage comporte une source lumineuse, notamment, constituée d'au moins une diode électroluminescente LED, qui peut être logée dans le plafonnier du véhicule.

Le module de détection et de capture de séquence gestuelle du dispositif de commande à reconnaissance gestuelle est apte à détecter, capturer et enregistrer toute séquence gestuelle exécutée par au moins un occupant du véhicule dans une zone de détection active de l'habitacle et apte à générer et à transmettre des données représentatives de ladite séquence gestuelle.

Selon l'invention, le module de détection et de capture de séquence gestuelle du dispositif de commande à reconnaissance gestuelle est orienté vers au moins une zone de détection active de l'habitacle du véhicule et est constitué d'au moins un moyen de détection gestuelle apte à détecter au moins un mouvement ou geste directionnel d'au moins un occupant du véhicule dans ladite zone de détection active potentiellement initiatrice d'une séquence gestuelle et d'au moins un moyen d'acquisition d'images apte à capturer et à enregistrer une séquence d'images correspondant à la séquence gestuelle détectée par ledit moyen de détection.

Le moyen d'acquisition d'images est activé dès lors qu'un mouvement et/ou geste est détecté par le moyen de détection dans la zone de détection active afin d'éviter que le moyen d'acquisition d'images fonctionne de façon continue et consommatrice d'énergie.

Le module de détection et de capture de séquence gestuelle peut comporter un unique moyen d'acquisition d'images, orienté sur une zone de détection active unique de manière à ce que le conducteur soit le seul apte à interagir avec le dispositif de commande à reconnaissance gestuelle ou bien comporter une pluralité de moyens de d'acquisition d'images, orientés sur une ou plusieurs zone(s) de détection active(s), de manière à ce que l'ensemble des occupants du véhicule soient aptes à interagir individuellement avec le dispositif de commande à reconnaissance gestuelle.

Le moyen de détection de séquence gestuelle peut être constitué de tout type de capteur et/ou caméra, apte à détecter au moins un mouvement ou geste d'un occupant du véhicule dans une zone de détection active prédéfinie. A titre d'exemple non limitatif, le capteur peut être un capteur infra-rouge et/ou ultrasons et/ou de type radar. Le moyen de détection pourra comporter une pluralité de capteurs de types différents, et tel ou tel capteur pourra être choisi en fonction d'une information reçue sur les conditions de luminosité par le module de commande. Le moyen de détection de séquence gestuelle interagit avec le moyen d'acquisition d'images tel que cela a pu être précisé précédemment.

Le moyen d'acquisition d'images du module détection et de capture de séquence gestuelle est constitué de tout moyen de prise de vues 2D ou 3D, source d'images et/ou de vidéos, ledit moyen étant apte à capturer, générer et enregistrer des séquences gestuelles fixes ou directionnelles 2D ou 3D exécutées dans une zone de détection active. A titre d'exemple non limitatif le moyen de prise de vues est une ou plusieurs caméra(s) et/ou appareil(s) photos. Par caméra on entend, par exemple, une caméra thermique et/ou une caméra pour la lumière visible et/ou une caméra infra-rouge pouvant fonctionner à tout niveau d'intensité lumineuse dans l'habitacle et/ou caméra laser et/ou un radar.

Les données acquises et générées par le module de détection et de capture de séquence gestuelle constituent des données définissant des formes géométriques mono, bi ou tridimensionnelle et/ou des données représentant au moins une position ou trajectoire de la partie du corps détectée dans une zone de détection active. On définit ainsi des « boîtes » dans lesquelles on repère la présence d'une partie du corps déterminée, et on analyse le déplacement de la succession de « boîtes » correspondant au déplacement de la partie du corps détecté. Ces données, représentatives de la séquence gestuelle exécutée par un occupant du véhicule, sont transmises au module de commande du dispositif de commande à reconnaissance gestuelle selon l'invention.

Le dispositif de commande à reconnaissance gestuelle peut comporter au moins un moyen d'affichage, lequel peut être configuré pour afficher un retour visuel de la position courante de la partie du corps concernée par le fonctionnement du dispositif selon l'invention et/ou les positions ou séquences gestuelles requises pour l'activation des commandes des modules d'éclairage. Le moyen d'affichage peut également permettre la sélection manuelle des fonctions d'éclairage.

Selon une caractéristique avantageuse de l'invention le module de commande du dispositif de commande à reconnaissance gestuelle est une unité centrale de traitement de données connectée à au moins un module de détection et de capture de séquence gestuelle et/ou au moins un moyen d'affichage. Le module de commande comporte, à minima, un processeur, une mémoire et un moyen de stockage de données. Le moyen de stockage de données comprend la base de données contenant les séquences gestuelles de références, les instructions d'activation des fonctions d'éclairage exécutables par le processeur et toute instruction de réception et de transmission de données.

Le principe de fonctionnement du module de commande du dispositif de commande à reconnaissance gestuelle selon l'invention est basé sur l'interdépendance existant entre une pluralité de séquences gestuelles exécutées par au moins un occupant du véhicule, de préférence par un membre supérieur dudit occupant, détectées dans une pluralité de zones de détection actives de l'habitacle et une pluralité de fonctions d'activation de l'éclairage de l'habitacle. Selon ce principe de fonctionnement, le module de commande est configuré pour :
- recevoir des données représentatives de la séquence gestuelle détectée et enregistrée par au moins un module de détection et de capture de séquence gestuelle,
- analyser lesdites données relatives à la forme géométrique mono, bi ou tridimensionnelle et/ou à la position de la séquence gestuelle et les comparer à des séquences gestuelles de référence stockées dans une base de données,
- déterminer si ladite séquence gestuelle enregistrée est analogue à l'une des séquences gestuelles de référence et si cette similarité permet d'atteindre les conditions seuil de déclenchement d'une fonction d'éclairage,
- transmettre une instruction déterminée à au moins un module d'éclairage et/ou au moyen d'affichage.

En vue d'obtenir l'activation d'au moins un module d'éclairage, un occupant du véhicule met en mouvement tout ou partie d'un de ses membres supérieurs et exécute, de manière volontaire et spécifique, une séquence gestuelle dans une zone de détection active de l'habitacle. Grâce à des étapes de détection, d'analyse, de comparaison et de commande propres au dispositif de commande à reconnaissance gestuelle selon l'invention, tout autre mouvement parasite reste sans effet sur l'activation des modules d'éclairage.

Selon une caractéristique avantageuse, le module de commande possède une capacité d'apprentissage de nouveaux mouvements, lesquels peuvent être enregistrés en vue d'alimenter la base de données en nouvelles séquences gestuelles de référence.

L'invention concerne un procédé de commande de l'éclairage intérieur au cours duquel on procède au moins, suite à une séquence gestuelle d'au moins un occupant dans une zone de détection de l'habitacle, à :
- une étape de capture et d'enregistrement d'images bidimensionnelles 2D et/ou tridimensionnelles 3D de ladite séquence gestuelle,
- une étape d'analyse d'images pour générer des données représentatives de la séquence gestuelle détectée,
- une étape de transmission de données représentatives de ladite séquence gestuelle,
- une étape de transmission desdites données représentatives à au moins un module de commande,
- une étape d'analyse desdites données relatives à la forme géométrique mono, bi ou tridimensionnelle et/ou à la position et/ou à la trajectoire de ladite séquence gestuelle,
- une étape de comparaison desdites données relatives à ladite séquence gestuelle enregistrée à au moins une séquence gestuelle de référence stockée dans une base de données,
- une étape permettant de déterminer si les conditions seuil de déclenchement d'une fonction d'éclairage sont atteintes,
- si les conditions seuil de déclenchement sont atteintes, une étape de transmission et d'exécution d'au moins une instruction d'allumage et/ou d'extinction et/ou de variation de l'intensité lumineuse à au moins un module d'éclairage intégré dans l'habitacle du véhicule.

Selon une caractéristique avantageuse, le procédé de commande peut comporter une étape d'apprentissage d'au moins une nouvelle séquence gestuelle de référence. Cette étape d'apprentissage peut être réalisée selon un processus itératif au cours duquel l'utilisateur répète une même séquence gestuelle afin que le module de commande puisse en faire la synthèse et générer un mouvement moyen définissant une nouvelle séquence gestuelle de référence.

Selon l'invention, on met en oeuvre un moyen de détection de séquence gestuelle et un moyen d'acquisition d'images distincts et aptes à interagir l'un avec l'autre, ledit moyen d'acquisition d'images n'étant mis en oeuvre que lorsque le moyen de détection a détecté l'amorce d'un geste pouvant initier une séquence gestuelle.

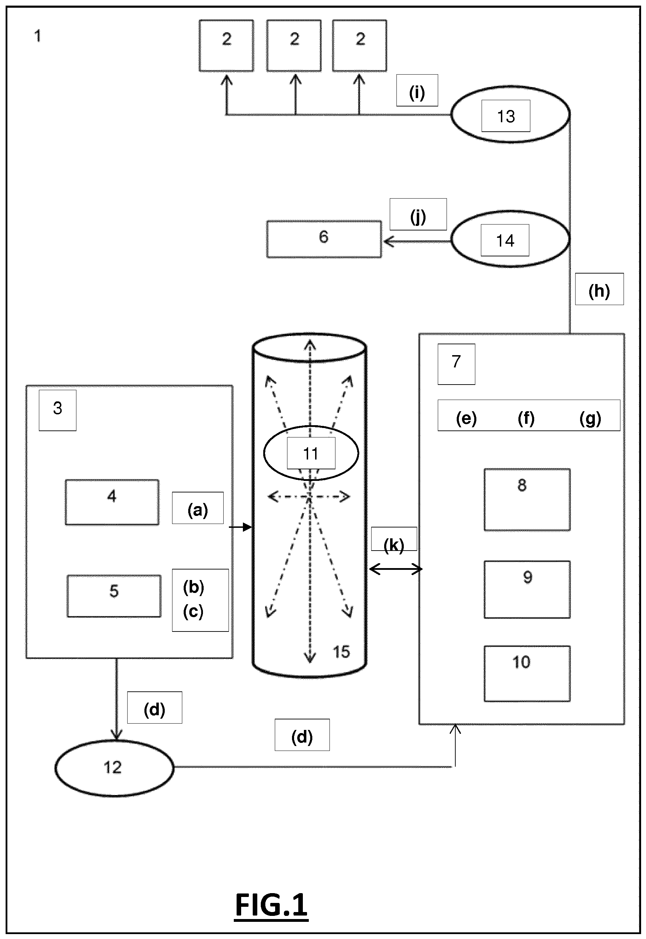

D'autres caractéristiques et avantages de l'invention apparaitront plus clairement à la lecture de la description détaillée d'un mode de réalisation de l'invention, donnée à titre d'exemple illustratif et non limitatif et s'appuyant sur la figure unique dans laquelle on a illustré le dispositif de commande à reconnaissance gestuelle pour l'éclairage intérieur d'un véhicule selon l'invention ainsi que des étapes du procédé associé.

Un dispositif de commande à reconnaissance gestuelle 1 pour l'éclairage intérieur d'un véhicule comporte au moins un module d'éclairage 2, configuré pour éclairer l'habitacle et disposé à cet effet, par exemple dans le plafonnier, et différents modules parmi lesquels au moins un module de détection et de capture de séquence gestuelle 3, dont la configuration va être décrite plus en détails ci-après, et un module de commande 7, qui peut comporter notamment un processeur 8, une mémoire 9 et un moyen de stockage de données 10. Le dispositif pourra comporter en outre un moyen d'affichage 6, de préférence intégré au tableau de bord du véhicule.

Le module de détection et de capture de séquence gestuelle 3, localisé de préférence dans la partie avant de l'habitacle du véhicule, est dans le cas illustré constitué d'un ou plusieurs moyen(s) de détection q. d'une séquence gestuelle 11, et d'un ou plusieurs moyen(s) d'acquisition d'images 5. Ces éléments constitutifs du module de détection et de capture de séquence gestuelle 3, interagissent et communiquent entre eux de manière à détecter, capturer, enregistrer au moins une séquence gestuelle 11 exécutée, dans une zone de détection active de l'habitacle 15, par un occupant du véhicule, de préférence le conducteur.

Le ou les moyen(s) de détection q. consistent ici en un ou plusieurs capteur(s) infra-rouge agencé(s) dans l'habitacle et le ou les moyen(s) d'acquisition d'images 5 consistent en une ou plusieurs caméras vidéos agencée(s) de façon indépendante des moyens de détection dans l'habitacle, étant entendu qu'au moins un moyen de détection et un moyen d'acquisition d'images sont configurés pour cibler la même partie de l'habitacle. On comprend que l'intérêt d'un découplage de ces deux moyens est de ne commander l'allumage des moyens d'acquisition d'images que lorsque les moyens de détection ont relevé le début d'un mouvement pouvant correspondre à une séquence gestuelle 11. On évite ainsi d'avoir des moyens d'acquisition d'images fonctionnant de manière continue. Toutefois, tel que cela a pu être précisé précédemment, on saurait n'utiliser qu'un seul dispositif combinant les moyens de détection et les moyens d'acquisition d'images.

Selon différentes variantes de l'invention, le module de détection et de capture de séquence gestuelle 3 peut comporter un moyen d'acquisition d'images 5 unique, orienté sur une zone de détection active 15 unique de manière à ce que le conducteur soit le seul apte à interagir avec le dispositif de commande à reconnaissance gestuelle, ou bien comporter une pluralité de moyens de d'acquisition d'images 5, orientés sur une ou plusieurs zone(s) de détection active(s), de manière à ce que l'ensemble des occupants du véhicule soient aptes à interagir individuellement avec le dispositif de commande à reconnaissance gestuelle 1. On comprend que le nombre et la configuration des moyens de détection pourraient être déterminés en fonction de la présence d'une ou plusieurs zones de détection active 15.

Une séquence gestuelle 11 est définie par une trajectoire verticale, horizontale et/ou diagonale exécutée dans une zone de détection active 15. La vitesse d'exécution de la séquence gestuelle 11 peut également être prise en compte afin de distinguer un geste simple, séquence gestuelle dite fixe, d'un mouvement, séquence gestuelle dite directionnelle.

En fonction de la quantité de modules d'éclairage 2 à activer et de leur positionnement dans l'habitacle, de nombreuses combinaisons de gestes associées à des zones de détection 15 précises peuvent être crées de manière à constituer un langage gestuel fonctionnel.

Dans le mode de réalisation principal et préférée de l'invention, les séquences gestuelles sont exécutées par un occupant assis à l'avant du véhicule, de préférence par le conducteur dans le but d'activer un module d'éclairage 2, de préférence un plafonnier central situé dans la partie avant de l'habitacle.

Dans cette configuration, on va décrire à titre d'exemple non limitatif, quatre combinaisons de séquences gestuelles 11 pouvant être envisagées, celles-ci devant être exécutées dans une zone de détection active 15 centrée sur la partie avant de l'habitacle. Ces combinaisons consistent en une succession de positions du bras du conducteur, identifié comme tel par un traitement des images acquises par les moyens d'acquisition d'images 5, dans la zone de détection active.

Une première combinaison de séquences gestuelles permet d'allumer le plafonnier, cette première combinaison consistant en une remontée verticale rapide du membre supérieur droit du conducteur en direction du plafond de l'habitacle pour atteindre une position haute, maintenue pendant quelques secondes, main droite ouverte paume à plat pour se terminer par un retour du membre supérieur à sa position courante sur le volant ou sur le levier de vitesse ou en repos sur un accoudoir.

Une deuxième combinaison de séquences gestuelles permet d'augmenter l'intensité lumineuse d'un module d'éclairage, cette deuxième combinaison consistant en une remontée lente, poing fermé, du membre supérieur droit du conducteur depuis le levier de vitesse en direction du plafond de l'habitacle.

Une troisième combinaison de séquences gestuelles permet de diminuer l'intensité lumineuse d'un module d'éclairage, cette troisième combinaison consistant en une descente lente, poing fermé, du membre supérieur droit du conducteur depuis un point haut de l'habitacle jusqu'au levier de vitesse.

Une quatrième combinaison de séquences gestuelles permet d'éteindre un module d'éclairage, et cette combinaison peut débuter par une remontée verticale rapide du membre supérieur droit du conducteur en direction du plafond de l'habitacle pour atteindre une position haute, où l'avant-bras effectuerait, main ouverte paume à plat, un balayage aller-retour gauche/droite pour se terminer par un retour du membre supérieur à sa position courante sur le volant ou sur le levier de vitesse ou en repos sur un accoudoir.

Dans ce qui précède, on a lié l'allumage et l'extinction des modules d'éclairage à la détection de séquences gestuelles. On pourra comprendre que la reconnaissance gestuelle est uniquement appliquée pour générer des instructions de modification du faisceau émis par les modules d'éclairage, en intensité lumineuse et/ou en orientation, et que les opérations d'allumage et d'extinction sont réalisées par une action du conducteur sur un bouton de commande, l'acquisition des images dans la zone de détection 15 ne commençant alors que lorsque le bouton de commande est actionnée.

En fonction du positionnement des modules d'éclairage dans l'habitacle d'autres combinaisons de séquences gestuelles peuvent être envisagées. Une séquence gestuelle à orientation diagonale et/ou horizontale peut, par exemple, être liée à l'activation de modules d'éclairages latéraux avant et/ou arrière et/ou à l'orientation du faisceau lumineux projeté par chacun des modules d'éclairage.

L'ensemble de ces combinaisons constitue les séquences gestuelles de référence sur la base desquelles le module de commande 7 analysera et comparera les données représentatives 12 des séquences gestuelles 11 exécutés par le conducteur. Ces séquences de référence sont, de préférence, apprises et reproduites par le conducteur dans le but d'activer et commander un module d'éclairage 2. L'acquisition et le stockage de toute nouvelle séquence de référence, mise au point par le conducteur lui-même, par le dispositif de commande à reconnaissance gestuelle 1, en particulier par le module de commande 7, est également possible.

Le procédé de commande selon l'invention a été explicité précédemment, et on se référera de nouveau à la figure pour le détailler en d'autres termes. Le procédé de commande est basé sur l'interdépendance existant entre une pluralité de séquences gestuelles 11, une pluralité de zones de détection actives 15 et une pluralité de fonctions d'activation de l'éclairage de l'habitacle ainsi que sur la connexion et la communication des éléments constitutifs du dispositif de commande à reconnaissance gestuelle 1 entre eux.

Selon le mode de réalisation principal et préféré de l'invention, le procédé comporte tout d'abord une étape de détection (a), dans une zone de détection 15 de l'habitacle, d'une initiation d'une séquence gestuelle 11 réalisée par tout ou partie du corps d'au moins un occupant du véhicule, cette détection étant réalisée par le module de détection et de capture de séquence gestuelle 3, de préférence par le moyen de détection 4. Cette étape de détection est suivie d'une étape de capture et d'enregistrement (b) d'images 2D et/ou 3D de ladite séquence gestuelle 11 réalisée par le module de détection et de capture de séquence gestuelle 3, de préférence par le moyen d'acquisition d'images 5, puis d'une étape de génération (c) de données représentatives 12 de ladite séquence gestuelle 11 par le module de détection et de capture de séquence gestuelle 3, de préférence par des moyens de traitement d'images associés au moyen d'acquisition d'images 5. Lesdites données représentatives 12 constituent des données définissant des formes géométriques mono, bi ou tridimensionnelle et/ou des données représentant au moins une position ou trajectoire dans une zone de détection active, par exemple un point ou nuage de points.

On procède alors à une communication entre le module de détection et de capture de séquence gestuelle et le module de commande 7, par une étape de transmission (d) desdites données représentatives 12 vers le module de commande 7, qui génère ensuite différentes étapes successives, parmi lesquelles :
- une étape d'analyse (e) desdites données relatives 12 à la forme géométrique mono, bi ou tridimensionnelle et/ou à la position et/ou à la trajectoire de ladite séquence gestuelle 11,
- une étape de comparaison (f) desdites données relatives à ladite séquence gestuelle enregistrée à au moins une séquence gestuelle de référence stockée dans une base de données,
- une étape permettant de déterminer (g) si les conditions seuil de déclenchement d'une fonction d'éclairage sont atteintes.

Si les conditions seuil de déclenchement sont atteintes, on peut prévoir simultanément, ou avec un léger décalage temporel, une étape de transmission (h) et d'exécution (i) d'au moins une instruction 13 d'allumage et/ou d'extinction et/ou de variation de l'intensité lumineuse et/ou d'orientation du faisceau à émettre à au moins un module d'éclairage 2 intégré dans l'habitacle du véhicule, et une étape de transmission (h) et d'exécution (j) d'au moins une instruction 14 d'affichage au moyen d'affichage 6, afin de renseigner aux occupants du véhicule la teneur de la modification effectuée sur le faisceau lumineux émis.

En outre, le procédé de commande peut comporter une étape d'apprentissage (k) d'au moins une nouvelle séquence gestuelle de référence.

## Revendications

1. Procédé de commande de l'éclairage intérieur d'un véhicule, au cours duquel on réalise successivement, en relation avec l'exécution d'au moins une séquence gestuelle (11) d'au moins un occupant du véhicule dans une zone de détection (15) de l'habitacle :
- une étape de capture et d'enregistrement (b) d'images 2D et/ou 3D de ladite séquence gestuelle (11),
- une étape d'analyse (c) des images pour générer des données représentatives (12) de ladite séquence gestuelle (11),
- une étape de transmission (d) desdites données représentatives (12) à au moins un module de commande (7),
- une étape d'analyse (e) desdites données relatives (12) à la forme géométrique mono, bi ou tridimensionnelle et/ou à la position et/ou à la trajectoire de ladite séquence gestuelle (11),
- une étape de comparaison (g) desdites données relatives à ladite séquence gestuelle enregistrée à au moins une séquence gestuelle de référence stockée dans une base de données,
- une étape permettant de déterminer (h) si des conditions seuil de déclenchement d'une fonction d'éclairage sont atteintes,
- une étape de transmission (i) et d'exécution (j) d'au moins une instruction (13) d'allumage et/ou d'extinction et/ou de variation de l'intensité lumineuse d'un faisceau lumineux émis dans l'habitacle
le procédé mettant en œuvre un moyen de détection de séquence gestuelle (4) et un moyen d'acquisition d'images (5) distincts et aptes à interagir l'un avec l'autre, **caractérisé en ce que** ledit moyen d'acquisition d'images (5) n est mis en œuvre dans l'étape de capture et d'enregistrement (b) que lorsque le moyen de détection (4) a détecté l'amorce d'un geste pouvant initier une séquence gestuelle.

2. Procédé de commande selon la revendication précédente, **caractérisé en ce qu'**il comporte une étape d'apprentissage (k) d'au moins une nouvelle séquence gestuelle de référence.

3. Dispositif de commande d'éclairage intérieur d'un véhicule automobile comprenant au moins un module d'éclairage (2) apte à émettre un faisceau lumineux dans l'habitacle, comportant :
- un module de détection et de capture de séquence gestuelle (3) constitué d'au moins un moyen de détection de séquence gestuelle (4) et d'au moins un moyen d'acquisition d'images (5), apte à détecter, capturer et enregistrer une séquence gestuelle (11) d'un occupant du véhicule dans une zone de détection active (15) de l'habitacle et apte à analyser cette séquence pour transmettre des données représentatives (12) de ladite séquence gestuelle (11), ledit moyen de détection de séquence gestuelle (4) et ledit moyen d'acquisition d'images (5) étant distincts et aptes à interagir l'un avec l'autre,
- un module de commande (7), connecté audit module de détection et de capture de séquence gestuelle (3), apte à recevoir les données représentatives (12) de ladite séquence gestuelle (11) enregistrée, à les comparer à au moins une séquence gestuelle de référence et à déterminer si les conditions seuil de déclenchement d'une fonction d'éclairage sont atteintes,
**caractérisé en ce que** ledit module de commande (7) est configuré pour exécuter le procédé de commande selon l'une des revendications 1 ou 2 et ainsi générer et transmettre au moins une instruction (13) d'allumage et/ou d'extinction et/ou de variation de l'intensité lumineuse et/ou d'orientation d'un faisceau émis par le au moins un module d'éclairage (2).

4. Dispositif selon la revendication 3, **caractérisé en ce que** la séquence gestuelle (11) est définie par son orientation verticale et/ou horizontale et/ou diagonale et sa vitesse d'exécution.

5. Dispositif selon l'une des revendications 3 ou 4, **caractérisé en ce que** la zone de détection active (15) s'étend le long de l'axe médian de l'habitacle du véhicule.

6. Dispositif selon l'une quelconque des revendications 3 à 5, **caractérisé en ce que** le module de détection et de capture de séquence gestuelle (3) comporte une pluralité de moyens de d'acquisition d'images (5).

7. Dispositif selon l'une quelconque des revendications 3 à 6, **caractérisé en ce que** le moyen de détection de séquence gestuelle (4) est constitué d'au moins un capteur de type à infra-rouge et/ou de type à ultrasons et/ou de type radar.

8. Dispositif selon l'une quelconque des revendications 3 à 7, **caractérisé en ce que** le moyen d'acquisition d'images (5) est constitué d'une ou plusieurs caméra(s) et/ou appareil(s) photos.

9. Dispositif selon l'une quelconque des revendications 3 à 8, **caractérisé en ce que** les données représentatives (12) de la séquence gestuelle définissent des formes géométriques mono, bi ou tridimensionnelle et/ou des positions et/ou des trajectoires.

## Patentansprüche

1. Verfahren zur Steuerung der Innenbeleuchtung eines Fahrzeugs, in dessen Verlauf man nacheinander in Verbindung mit der Ausführung mindestens einer Gestensequenz (11) mindestens eines Insassen des Fahrzeugs in einem Erkennungsbereich (15) des Fahrzeugs ausführt:
- einen Schritt des Aufnehmens und Aufzeichnens (b) von 2D- und/oder 3D-Bildern der Gestensequenz (11),
- einen Schritt des Analysierens (c) der Bilder, um repräsentative Daten (12) der Gestensequenz (11) zu erzeugen,
- einen Schritt des Übertragens (d) der repräsentativen Daten (12) an mindestens ein Steuermodul (7),
- einen Schritt des Analysierens (e) der Daten (12) bezüglich der ein-, zwei- oder dreidimensionalen Form und/oder der Position und/oder der Trajektorie der Gestensequenz (11),
- einen Schritt des Vergleichens (g) der Daten bezüglich der aufgezeichneten Gestensequenz mit mindestens einer Referenzgestensequenz, die in einer Datenbank gespeichert ist,
- einen Schritt, der es ermöglicht zu bestimmen (h), ob Schwellenwertbedingungen zum Auslösen einer Beleuchtungsfunktion erfüllt sind,
- einen Schritt des Übertragens (i) und Ausführens (j) mindestens einer Anweisung (13) zum Einschalten und/oder Ausschalten und/oder Ändern der Lichtintensität eines in den Innenraum emittierten Lichtstrahls, wobei das Verfahren ein Gestensequenzerkennungsmittel (4) und ein Bilderfassungsmittel (5) einsetzt, die verschieden sind und geeignet sind, miteinander zu interagieren, **dadurch gekennzeichnet, dass** das Bilderfassungsmittel (5) in dem Schritt des Aufnehmens und Aufzeichnens (b) nur eingesetzt wird, wenn das Erkennungsmittel (4) den Beginn einer Geste erkannt hat, die eine Gestensequenz einleiten kann.

2. Verfahren zur Steuerung nach dem vorhergehenden Anspruch, **dadurch gekennzeichnet, dass** es einen Schritt des Erlernens (k) mindestens einer neuen Referenzgestensequenz umfasst.

3. Vorrichtung zur Steuerung der Innenbeleuchtung eines Kraftfahrzeugs, die mindestens ein Beleuchtungsmodul (2) aufweist, das geeignet ist, einen Lichtstrahl in den Innenraum zu emittieren, umfassend:
- ein Gestensequenzerkennungs- und -aufnahmemodul (3), das aus mindestens einem Gestensequenzerkennungsmittel (4) und mindestens einem Bilderfassungsmittel (5) besteht, geeignet ist, eine Gestensequenz (11) eines Insassen des Fahrzeugs in einem aktiven Erkennungsbereich (15) des Fahrzeugs zu erkennen, aufzunehmen und aufzuzeichnen, und geeignet ist, diese Sequenz zu analysieren, um repräsentative Daten (12) der Gestensequenz (11) zu übertragen, wobei das Gestensequenzerkennungsmittel (4) und das Bilderfassungsmittel (5) verschieden sind und geeignet sind, miteinander zu interagieren,
- ein Steuermodul (7), das mit dem Gestensequenzerkennungs- und -aufnahmemodul (3) verbunden ist und geeignet ist, repräsentative Daten (12) der aufzeichneten Gestensequenz (11) zu empfangen, sie mit mindestens einer Referenzgestensequenz zu vergleichen und zu bestimmen, ob Schwellenwertbedingungen zum Auslösen einer Beleuchtungsfunktion erfüllt sind, **dadurch gekennzeichnet, dass** das Steuermodul (7) dazu ausgestaltet ist, das Verfahren zur Steuerung nach einem der Ansprüche 1 oder 2 auszuführen und somit mindestens eine Anweisung (13) zum Einschalten und/oder Ausschalten und/oder Ändern der Lichtintensität und/oder Ausrichten eines von dem mindestens einen Beleuchtungsmodul (2) emittierten Strahls zu erzeugen und zu übertragen.

4. Vorrichtung nach Anspruch 3, **dadurch gekennzeichnet, dass** die Gestensequenz (11) durch ihre vertikale und/oder horizontale und/oder diagonale Ausrichtung und ihre Ausführungsgeschwindigkeit definiert wird.

5. Vorrichtung nach einem der Ansprüche 3 oder 4, **dadurch gekennzeichnet, dass** der aktive Detektionsbereich (15) sich entlang der Mittelachse des Innenraums des Fahrzeugs erstreckt.

6. Vorrichtung nach einem der Ansprüche 3 bis 5, **dadurch gekennzeichnet, dass** das Gestensequenzerkennungs- und -aufnahmemodul (3) eine Mehrzahl von Bilderfassungsmitteln (5) umfasst.

7. Vorrichtung nach einem der Ansprüche 3 bis 6, **dadurch gekennzeichnet, dass** das Gestensequenzerkennungsmittel (4) aus mindestens einem Infrarot- und/oder Ultraschall- und/oder Radarsensor besteht.

8. Vorrichtung nach einem der Ansprüche 3 bis 7, **dadurch gekennzeichnet, dass** das Bilderfassungsmittel (5) aus einer oder mehreren Kamera(s) und/oder Fotoapparat(en) besteht.

9. Vorrichtung nach einem der Ansprüche 3 bis 8, **dadurch gekennzeichnet, dass** die repräsentativen Daten (12) der Gestensequenz ein-, zwei- oder dreidimensionale geometrische Formen und/oder Positionen und/oder Trajektorien definieren.

## Claims

1. Method for controlling the interior lighting of a vehicle, in the course of which method the following are carried out successively, in connection with execution of at least one gestural sequence (11) by at least one occupant of the vehicle in a detection zone (15) of the passenger compartment:
- a step of capturing and recording (b) 2D and/or 3D images of said gestural sequence (11),
- a step of analysing (c) the images to generate data (12) representative of said gestural sequence (11),
- a step of transmitting (d) said representative data (12) to at least one control module (7),
- a step of analysing (e) said relative data (12) in respect of the one-, two- or three-dimensional geometric shape and/or of the position and/or of the path of said gestural sequence (11),
- a step of comparing (g) said relative data regarding said recorded gestural sequence with at least one reference gestural sequence stored in a database,
- a step making it possible to determine (h) whether threshold conditions for triggering a lighting function have been met,
- a step of transmitting (i) and executing (j) at least one instruction (13) to switch on and/or switch off and/or vary the light intensity of a light beam emitted into the passenger compartment, the method employing a gestural-sequence-detecting means (4) and an image-acquiring means (5) that are distinct and that are able to interact with each other, **characterized in that** said image-acquiring means (5) is employed in the step of capturing and recording (b) only when the detecting means (4) has detected the start of a gesture capable of initiating a gestural sequence.

2. Control method according to the preceding claim, **characterized in that** it comprises a step of learning (k) at least one new reference gestural sequence.

3. Device for controlling the interior lighting of a motor vehicle, comprising at least one lighting module (2) able to emit a light beam into the passenger compartment, and comprising:
- a module (3) for detecting and capturing gestural sequences, which consists of at least one gestural-sequence-detecting means (4) and of at least one image-acquiring means (5), which is able to detect, capture and record a gestural sequence (11) of an occupant of the vehicle in an active detection zone (15) of the passenger compartment and which is able to analyse this sequence with a view to transmitting data (12) representative of said gestural sequence (11), said gestural-sequence-detecting means (4) and said image-acquiring means (5) being distinct and able to interact with each other,
- a control module (7), which is connected to said module (3) for detecting and capturing gestural sequences, and which is able to receive the data (12) representative of said recorded gestural sequence (11), to compare them with at least one reference gestural sequence and to determine whether the threshold conditions for triggering a lighting function have been met, **characterized in that** said control module (7) is configured to execute the control method according to either of Claims 1 and 2 and thus to generate and transmit at least one instruction (13) to switch on and/or switch off and/or vary the light intensity and/or orientation of a beam emitted by the at least one lighting module (2) .

4. Device according to Claim 3, **characterized in that** the gestural sequence (11) is defined by its vertical and/or horizontal and/or diagonal orientation and its speed of execution.

5. Device according to either of Claims 3 and 4, **characterized in that** the active detection zone (15) extends along the centre line of the passenger compartment of the vehicle.

6. Device according to any one of Claims 3 to 5, **characterized in that** the module (3) for detecting and capturing gestural sequences comprises a plurality of image-acquiring means (5).

7. Device according to any one of Claims 3 to 6, **characterized in that** the gestural-sequence-detecting means (4) consists of at least one infrared sensor and/or ultrasound sensor and/or sensor of the radar type.

8. Device according to any one of Claims 3 to 7, **characterized in that** the image-acquiring means (5) consists of one or more video cameras and/or still cameras.

9. Device according to any one of Claims 3 to 8, **characterized in that** the data (12) representative of the gestural sequence define one-, two- or three-dimensional geometric shapes and/or positions and/or paths.
